**Europäisches Patentamt**

(19) **European Patent Office**

**Office européen des brevets**

(11) Publication number : **0 442 597 B1**

(12) **EUROPEAN PATENT SPECIFICATION**

(45) Date of publication of patent specification :
18.05.94 Bulletin 94/20

(51) Int. Cl.⁵ : **E04C 2/52, E02B 3/12**

(21) Application number : **91300003.0**

(22) Date of filing : **02.01.91**

(54) **Moisture-impervious panel capable of rapid/delayed hydration.**

(30) Priority : **15.02.90 US 481443**
**15.02.90 US 481442**
**15.02.90 US 481454**

(43) Date of publication of application :
**21.08.91 Bulletin 91/34**

(45) Publication of the grant of the patent :
**18.05.94 Bulletin 94/20**

(84) Designated Contracting States :
**AT BE CH DE DK ES FR GB IT LI NL SE**

(56) References cited :
**US-A- 2 309 702**
**US-A- 3 186 896**
**US-A- 3 445 322**
**US-A- 3 561 177**

(73) Proprietor : **AMERICAN COLLOID COMPANY**
**One North Arlington, 1500 West Shure Drive**
**Arlington Heights, Illinois 60004 (US)**

(72) Inventor : **Alexander, William**
**242 Terrance**
**Naperville, Illinois 60540 (US)**

(74) Representative : **Wain, Christopher Paul et al**
**A.A. THORNTON & CO. Northumberland**
**House 303-306 High Holborn**
**London WC1V 7LE (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is directed to a rigid or flexible moisture-impervious panel capable of being rapidly hydrated after installation and contact with water and/or capable of delayed hydration prior to installation. More particularly, the present invention is directed to a moisture-impervious panel preformed from a pair of spaced facing sheets, e.g. paperboard and/or fabric sheets, filled therebetween with an intermediate layer of water-swellable clay, such as bentonite. At least one of the facing sheets is provided with a plurality of apertures extending to the intermediate water-swellable clay layer to permit rapid entry of water into the bentonite layer for rapid hydration of the intermediate water-swellable clay layer. In one embodiment, at least the apertures, and preferably the entire apertured facing layer, are coated with a water-removable material to prevent premature hydration of the intermediate clay layer.

It is well known to provide seepage-resistant structures using water-swellable clays, such as bentonite, disposed across a path of possible seepage or flow and confining the water-swellable clay to the area of possible seepage. For example, this assignee's Bechtner U.S. Patent No. 2,277,286 discloses the use of bentonite clay filled between spaced forms or bulkheads, such as wood, masonry or other suitable materials to hold the bentonite in place. US-A-3 445 322 describes a water barrier laminate including a porous casing member (for example of asbestos paper), compartments in the laminate for holding bentonite clay in position against a wall, and a tenacious plastic membrane forming the outside of the laminate for preventing rupture thereof. The plastic membrane may be continuous, or may include apertures for permitting liquid to pass therethrough. Another of this assignee's prior patents to Arthur G. Clem, Patent no. 3,186,896 discloses a moisture-impervious panel preformed from spaced paperboard sheets interconnected with an intermediate layer of a water-swellable clay, such as bentonite, that has been sold for many years by this assignee as a waterproofing barrier. When subjected to leakage or seepage of water, the outwardly extending water-pervious paper or cardboard facing sheet will absorb the water and pass the water through the facing sheet for contact with the intermediate layer of water-swellable clay thereby permitting the clay to hydrate, swell and block the passage of water completely through the panel. As set forth in the Clem Patent No. 3,186,896, the facing sheets should have no openings which permit the escape of the compacted bentonite therethrough.

One of the problems prevalent with the use of the moisture-impervious panels disclosed in the Clem Patent No. 3,186,896 is that the paper or cardboard facing sheets used to form the exterior surfaces of these panels require a period of time in order to become saturated sufficiently to permit water to penetrate the sheet and contact the intermediate water-swellable clay layer. During this facing sheet saturation period, water in contact with the panels flows laterally over the facing sheet and can find a crack, crevice or panel-damage area so that water can penetrate the panel, or penetrate between adjacent panels, at one or more of these locations before the intermediate water-swellable clay layer has had sufficient time to hydrate sufficiently and swell laterally to prevent this water penetration. Though such water damage will probably be of a relatively minor consequence, caused during a relatively short period of time until the intermediate water-swellable clay layer has had sufficient water contact for hydration, such water damage can be substantial and can create damage areas capable of substantial water penetration over time, in addition to being very costly to excavate and repair. Although this problem has existed since the first use of these water-impervious panels, for over twenty years, presenting a long-felt need in this art, to date this problem has not been solved.

Many attempts have been made to improve upon the water-impermeability of multi-layer articles of manufacture containing bentonite. The following patents represent efforts to provide a water-impervious sheet material containing adhesively secured water-swellable clays: Clem 4,467,015; Clem 4,501,788; McGroarth et al 4,693,923; Harriett 4,656,062; and Harriett 4,787,780. Other patents disclose the use of water-impermeable layers for protecting a soil surface, such at British patent specification 1,059,363; British patent specification 1,029,513 and British patent specification 1,129,840. Blias U.S. Patent No. 4,344,722 discloses a water barrier constructed in the field by applying a first flexible, water-permeable fabric layer to a soil surface, overlaying a thickness of water-swellable clay material, and applying an overlayer of the same flexible, water-permeable fabric thereover. This eliminates the need for applying an adhesive to secure the clay to fabric sheets, but is expensive since the barrier material cannot be performed but must be constructed in the field. U.K. published patent application GB 2,202,185A discloses a layer of water-swellable bentonite between flexible layers that have been needle-punched together in a needle loom.

While many of the above-described prior art multi-layer, water-impermeable, bentonite-containing materials undoubtedly permit rapid hydration of the intermediate water-swellable clay layer, these flexible materials are basically used to seal the floor of a lagoon or a waste-containment area and, to date, no one has provided a rigid panel construction that has the capability of rapid hydration of the intermediate water-swellable clay layer in accordance with the principles of the present invention.

In brief, the present invention is directed to a panel, and method of making the panel, useful as a water barrier including an intermediate layer of a water-swellable colloidal clay, such as bentonite, sandwiched between two layers of exterior sheet material, such as paperboard, including an optional intermediate support sheet, wherein at least one of the exterior sheet material layers has a plurality of spaced apertures or water channels extending from the exterior of the panel to the intermediate water-swellable clay layer. In one preferred embodiment, at least one of the sheet material layers that includes water channels is rigid. In another embodiment, the sheet material layer containing water channels includes a coating of water-removable material extending completely across the water channels in the facing sheet having controlled, predetermined water-solubility so that the intermediate water-swellable clay layer is quickly hydrated after solubilization and removal of the coating material, and to prevent clay hydration during installation, prior to removal of the coating material.

Accordingly, one aspect of the present invention is to provide a panel useful as a water barrier including first and second facing sheets having a layer of water-swellable clay therebetween, wherein one of the facing sheets is water-permeable, characterised in that said water-permeable facing sheet includes a plurality of formed water channels therein extending from an outer surface of the one facing sheet to an inner surface of the one facing sheet, in addition to the natural water channels therein, to allow rapid penetration of water, and in that the water channels contain a layer of material of controlled water-solubility to prevent water from passing through the water channels during installation of the panel and removable by water contact after panel installation.

Another aspect of the present invention is to provide a water barrier panel and method of manufacturing the water barrier panel, including opposed facing sheets secured to an intermediate layer of a compacted water-swellable clay, such as bentonite, wherein at least one of the facing sheets is formed from a water-penetrable, water-absorbent material, such as cardboard or paperboard, including a plurality of spaced apertures therein for more rapid penetration of water into the intermediate water-swellable clay layer during saturation of the water-penetrable facing sheet.

Another aspect of the present invention is to provide a rigid water barrier panel and method of manufacturing the water barrier panel, including opposed rigid facing sheets secured to an intermediate layer of a compacted water-swellable clay, such a bentonite, wherein at least one of the facing sheets is formed from a water-penetrable, water-absorbent material, such as cardboard or paperboard, including a plurality of spaced apertures therein For more rapid penetration of water into the intermediate water-swellable clay layer during saturation of the water-penetrable facing sheet.

Still another aspect of the present invention is to provide a water barrier and a method of manufacturing the water barrier including an intermediate layer of a water-swellable colloidal clay, such a bentonite, sandwiched between opposed facing sheets, with an optional intermediate support sheet, wherein at least one of the facing or intermediate support sheets is relatively rigid to provide rigidity to the overall panel construction, having a plurality of spaced apertures or water channels in at least one of the facing sheets for rapid water penetration and hydration of the intermediate clay layer.

Another aspect of the present invention is to provide a water barrier and a method of manufacturing the water barrier including an intermediate layer of a water-swellable colloidal clay, such as bentonite, sandwiched between opposed facing sheets, with an optional intermediate support sheet, wherein at least one of the facing or intermediate support sheets is relatively rigid to provide rigidity to the overall panel construction, having a plurality of spaced apertures in at least one of the facing sheets for rapid water penetration and hydration of the intermediate clay layer wherein the apertures are initially coated with a water-soluble coating material to prevent premature clay hydration.

A further aspect of the present invention is to provide a new and improved water barrier and method of manufacturing the water barrier, including an intermediate layer of water-swellable colloidal clay sandwiched between opposed facing sheets at least one of said facing sheets including water channels, wherein the water channels in the one facing sheet are coated with a layer of material having a predetermined water solubility, in a desired thickness, so that water cannot penetrate the one facing sheet to contact the intermediate water-swellable clay layer until after removal of the coating material by solubilization.

The above and other aspects and advantages of the present invention will become more apparent with reference to the drawings and detailed description of the preferred embodiments, in which :

FIG. 1 is a perspective view of the rigid, moisture-impervious panel of the present invention;

FIG. 2 is an enlarged, partially broken away side view of the panel of FIG. 1 taken along line 2-2 of FIG. 1;

FIG. 3 is a perspective view of the panel of FIG. 1 during manufacture showing the formation of apertures in one of the facing sheets;

FIG. 4 is an enlarged, partially broken away side view of the panel of FIG. 1 including a coating of water-removable wax material on both facing sheets, where both facing sheets include pre-formed apertures;

FIG. 5 is a perspective view of another embodiment of a rigid panel of the present invention showing the exterior facing sheets formed of flexible fabrics, and including a central rigid corrugated sheet;

FIG. 6 is an enlarged, partially broken away side view of the panel of FIG. 5, taken along the line 6-6 of FIG. 5;

FIG. 7 is an enlarged, partially broken away side view of another embodiment of the panel of the present invention wherein the panel is formed from flexible fabric on the exterior layers, at least one of the exterior layers coated with a water-soluble coating material;

FIG. 8 is an enlarged, partially broken away side view of another embodiment of a rigid panel manufactured in accordance with the principles of the present invention, having a rigid, e.g. plastic, facing sheet forming an exterior surface;

FIG. 9 is an enlarged, partially broken away side view of another embodiment of a rigid panel manufactured in accordance with the principles of the present invention, having one rigid facing sheet and one flexible fabric facing sheet, and showing an optional corrugated strip therebetween;

FIG. 10 is an enlarged, partially broken away side view of another embodiment of the panel of the present invention wherein the panel is formed from a flexible fabric on one exterior layer, and a rigid polyethylene panel forming the other exterior layer;

FIG. 11 is an enlarged, partially broken away side view of another embodiment of a rigid panel manufactured in accordance with the principles of the present invention, having one rigid facing sheet and one flexible fabric facing sheet, and showing an optional corrugated strip therebetween;

FIG. 12 is a perspective view of the rigid, moisture-impervious panel of the present invention;

FIG. 13 is an enlarged, partially broken away side view of the panel of FIG. 1 taken along line 2-2 of FIG. 1;

FIG. 14 is an enlarged, partially broken away side view of another embodiment of the panel of the present invention wherein the panel is formed from flexible fabric exterior layers, at least one of the exterior layers coated with a water-soluble coating material;

FIG. 15. is an enlarged, partially broken away side view of another embodiment of a rigid panel manufactured in accordance with the principles of the present invention, having one rigid facing sheet and one flexible fabric facing sheet, and showing an optional corrugated strip therebetween; and

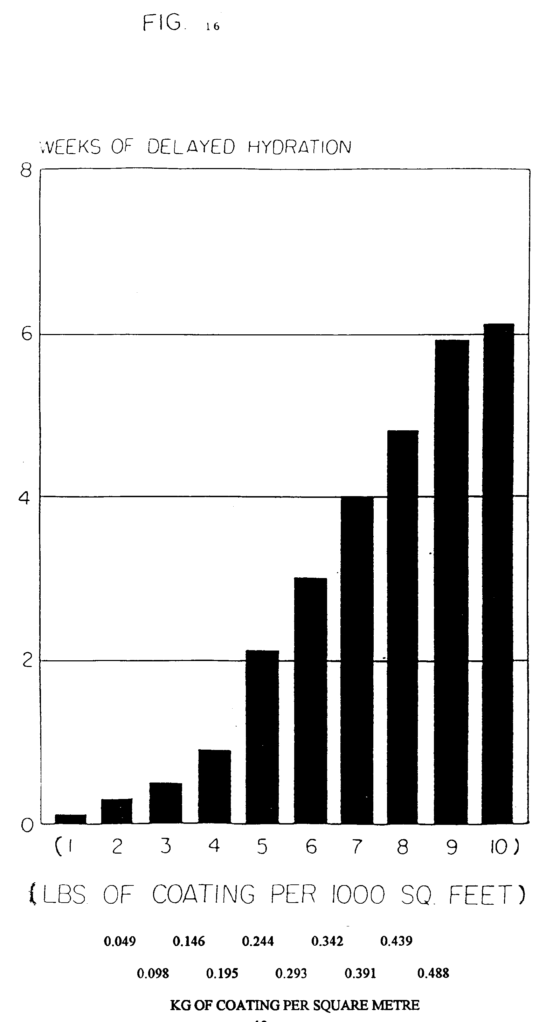

FIG. 16 is a graph showing the time required for panel hydration when coated with different thicknesses of FRESLOK 195, a wax coating material.

In accordance with the present invention, a rigid or flexible moisture-impervious, bentonite-containing panel is constructed with apertures or other water channels and, optionally, a water-soluble coating material for prevention of hydration during installation while retaining the capability of being rapidly hydrated after installation and contact with water. The moisture-impervious panel of the present invention is preformed from a pair of spaced facing sheets, such as paperboard sheets, and, optionally, an intermediate support sheet, filled therebetween with an intermediate layer of water-swellable clay, such as bentonite. At least one of the exterior facing sheets is provided with a plurality of apertures or water channels extending to the intermediate water-swellable clay layer to permit rapid entry of water into the water-swellable clay layer for rapid hydration of the intermediate water-swellable clay layer. In order to prevent premature hydration of the intermediate water-swellable clay layer in one embodiment of the present invention, at least one of the facing sheets containing water channels is coated with a desired thickness of a water-soluble coating material having controlled, predetermined water-solubility, so that the intermediate water-swellable clay layer will not be hydrated during installation of the panel, such as by contact with rain water. The intermediate water-swellable clay layer is quickly hydrated without the coating material layer, and quickly hydrated when the coating layer is included in the product after solubilization and removal of the coating material, after installation.

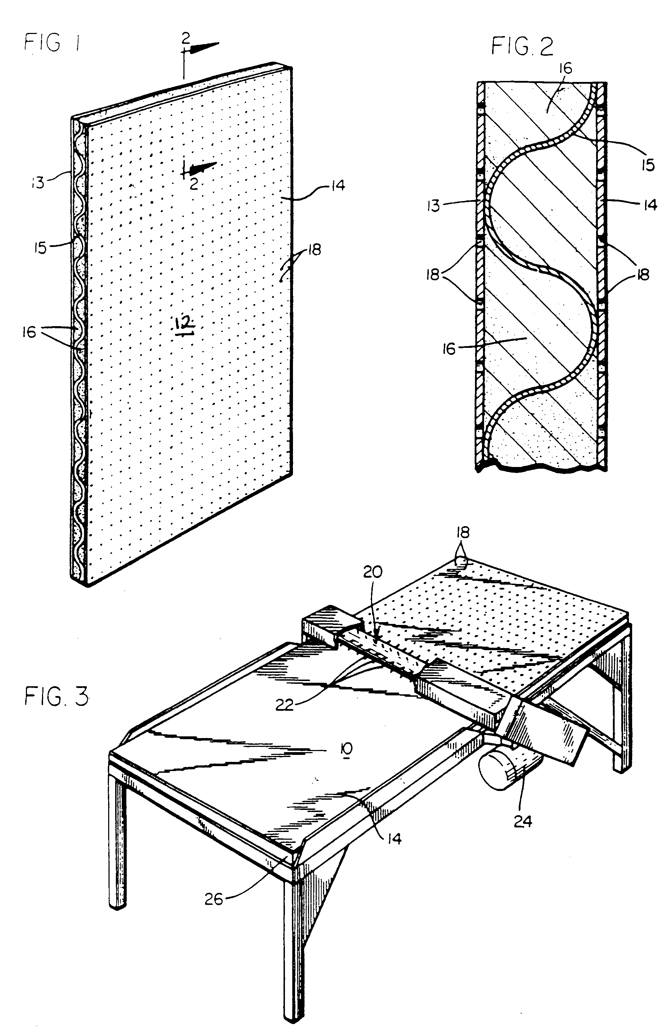

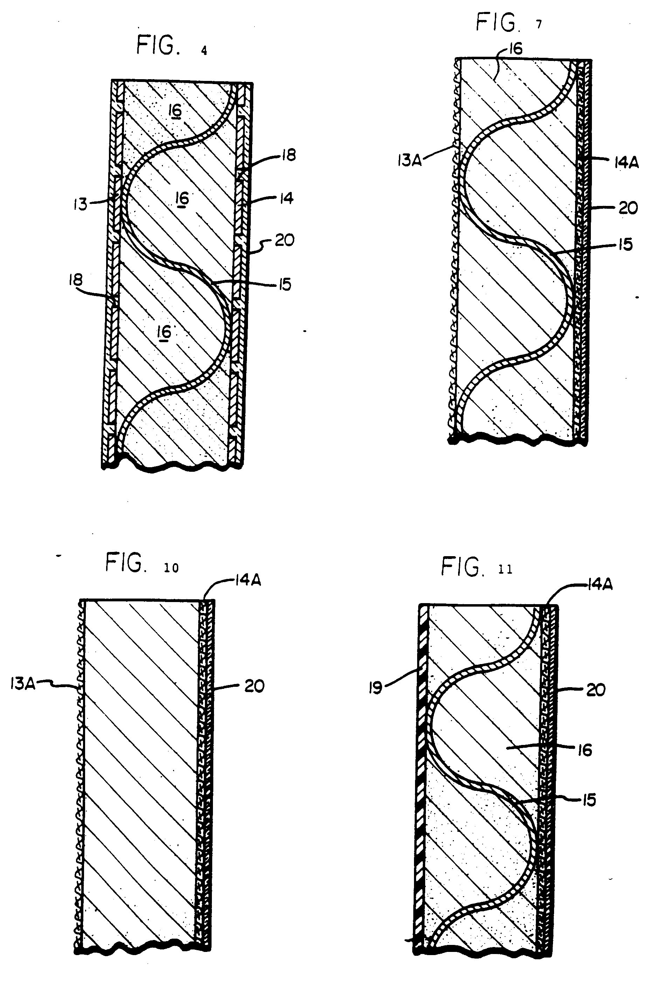

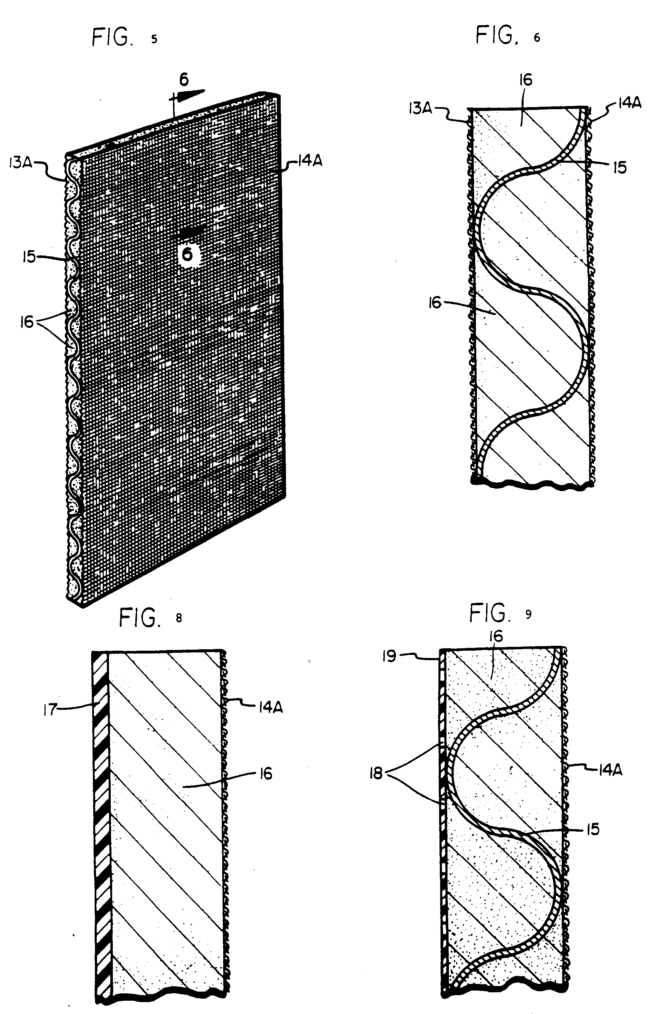

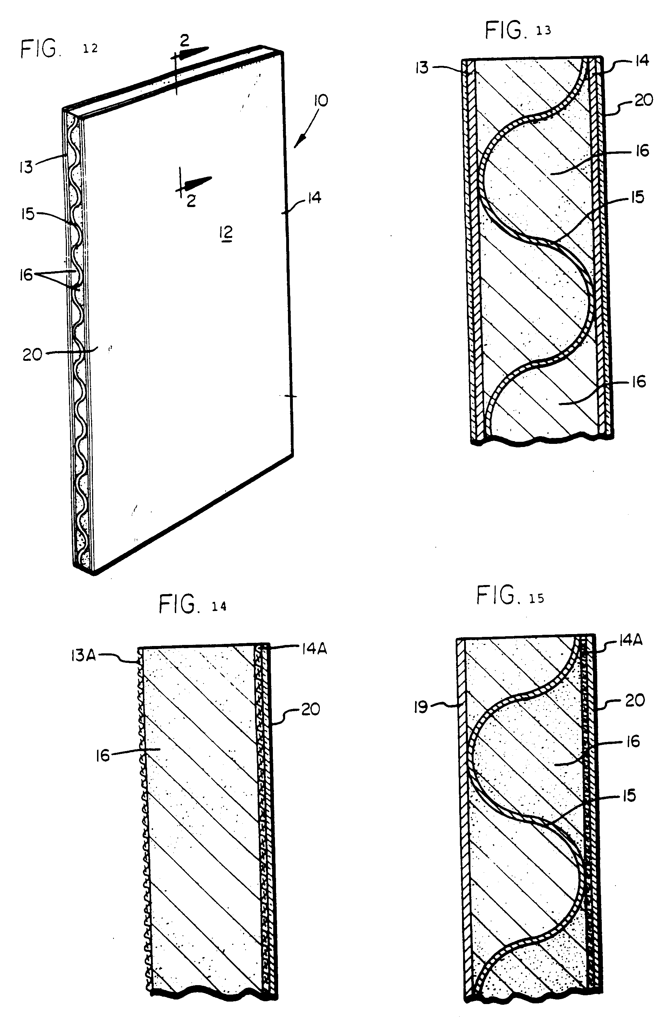

Turning now to the drawings, and initially to FIGS. 1-3, there is illustrated a new and improved preformed water barrier panel, generally designated by reference numeral 10, and formed of a corrugated paperboard carrier or form, generally designated 12, including a pair of spaced paperboard facing sheets 13 and 14, joined and interconnected by a paper corrugated strip 15 to form a plurality of voids between the strips 15 and the facing sheets 13 and 14. The voids are filled with a compacted mass of finely divided water-swellable clay 16. It will be appreciated that the panel 10 may be preformed and assembled into a moisture-impervious structure which may be readily sawed or cut to the desired shape in the field.

The water-swellable colloidal clay utilized as the sandwiched clay layer 16 between facing sheets 13 and 14 is any water-swellable colloidal clay which will hydrate in the presence of water, i.e., will swell in the presence of water. In accordance with one important embodiment of the present invention, the colloidal clay is bentonite. A preferred bentonite is sodium bentonite which is basically a hydratable montmorillonite clay of the type generally found in the Black Hills region of South Dakota and Wyoming. This clay has sodium as a predominant exchange ion. However, the bentonite utilized in accordance with the present invention may also contain other cations such as magnesium and iron. There are cases wherein a montmorillonite predominant in calcium ions can be converted to a high swelling sodium variety through a well known process called "peptizing". The colloidal clay utilized in this invention may be one or more peptized bentonites. The colloidal clay also may be any member of the dioctahedral or trioctahedral smectite group or mixtures thereof. Examples are Beidellite, Nontronite, Hectorite and Saponite. To achieve the full advantage of the present invention, the colloidal clay, i.e., bentonite, generally is finely divided as known for use in water barrier panels and the like, i.e., 0.841 to 0.041 mm aperture (20 to 350 mesh), preferably 0.841 to 0.297 mm aperture (20 to 50 mesh).

The facing sheets 13, and 14, and the corrugated paper strip 15 are illustrated as paperboard or cardboard, but any material capable of providing rigidity to the panel 10 may be utilized. For example, the centrally disposed corrugated strip 15 could be a rigid plastic, e.g., a rigid polyolefin provided with water channels or openings (not shown) to provide for fluid communication between entering water and the entire intermediate clay layer 16, on both sides of the strip 15. Similarly, as shown in FIGS. 5 and 6, corrugated strip 15 can be a paperboard sheet while the facing sheets 13A and 14A are made from a flexible woven or non-woven fabric that contains natural apertures or water channels between filaments or strands of fabric material. Alternatively, as shown in FIGS. 8 and 9, one of the facing sheets 17 or 19 is a rigid plastic, e.g., polyethylene, that is water-impermeable.

In accordance with the present invention, one of the facing sheets, 13 or 14, that is disposed to face the water flow, e.g., extending outwardly from a structure, such as a foundation wall, is provided with a plurality of spaced apertures or water channels 18, extending completely through the facing sheet 14 from an outer major surface to the intermediate water-swellable clay layer 16, to provide rapid hydration of clay layer 16 upon contact of water against facing sheet 14, during water saturation of the facing sheet 14. As shown in FIG 9, one of the facing sheets 19 that contacts a structure need not contain water channels and can be formed from a water-impermeable material, such as a polymeric sheet material, e.g. polyethylene layer 19. As indicated above, the outwardly-disposed facing sheet 14 or 14A may be made of a very water-porous material, such as a woven or non-woven fabric 14A, as shown in FIGS. 4-7. Facing sheets formed from more water-impermeable materials, such as a polyethylene sheet, are provided with apertures 18 and the more water-impermeable the facing sheet 13 or 14, the more apertures are provided in comparison to a facing sheet formed from a water-penetrable material, such as fabric layers 13A and 14A, having natural water channels, or quickly absorbent materials, such as paper. It has been found that apertures on the order of about 0.040cm (1/64") to about 0.318cm (1/8"), preferably about 0.079cm (1/32") in diameter, at an aperture density of about 0.15 to about 7.75 apertures/cm$^2$ (about 2 to about 50 apertures/in$^2$), preferably about 3.10 to about 6.20 apertures/cm$^2$ (about 20 to about 40 apertures/in$^2$), provide exceptionally rapid hydration of the intermediate clay layer 16 for paperboard sheets, whereas about 1.55 to about 10.85 (about 10 to about 70) of these apertures, preferably about 3.10 to about 9.3 (about 20 to about 60) apertures/cm$^2$ (apertures/in$^2$) are more suitable for water-impermeable materials, such as a polyolefin sheet, to render the sheet water-permeable and provide rapid hydration and swelling of the intermediate clay layer 16, after coating removal.

The apertures 18 permit rapid hydration of the clay layer 16, as desired, once the panel 10 is installed in its intended location, such as disposed against a foundation wall and confined with backfilled soil. However, it is undesirable to permit hydration of the intermediate clay layer 16 prior to the panels 10 being confined, such as by soil backfilling, since the water-swellable clay will expand laterally, and outwardly from between the facing sheets. Laterally expanded clay that oozes outwardly from the panels 10, prior to complete installation, may be lost or unavailable where needed when installation is completed, whether or not complete drying of the panel has occurred prior to completion of installation. For example, clay that laterally moves outwardly from between facing sheets 13 and 14 of panels 10 may not return to the original location after drying, and may be lost if backfilling is completed prior to complete drying of the panels 10. Accordingly, in accordance with one embodiment of the present invention, if the panels are likely to be wetted prior to installation, it is desirable to coat the apertures or water channels with the water-removable coating material 20.

As shown in FIG. 3, a rotatably elongated shaft generally designated by reference number 20, having a plurality of spikes 22 of desired spacing throughout the length and circumference of the shaft 20 can be used in the manufacture of the panel 10 to provide apertures or water channels 18 in one or both exterior facing sheets 13 and 14. As shown in FIG. 3, the shaft 20 is operatively connected to an electric motor 24 to rotate the shaft 20 thereby forming the apertures 18 within one or both exterior facing sheets 13 or 14. It will be understood from FIG. 3 that the panel 10 is supported on table 26 sufficiently close to shaft 20 to provide apertures completely through the exterior facing sheet 14.

In accordance with an important feature of the present invention, it has been found that a layer of material 20 of controlled, predetermined water-solubility, protects the panels from premature hydration during handling and installation, and is removed upon a first sustained contact with water when in the desired area of installation. Suitable water-soluble materials capable of sustaining a predetermined number of rain-falls, and the like, during installation and handling are easily removed upon sustained water contact, such as water in soil used for backfilling, after installation. Optionally, the soil adjacent the panels can be saturated with water after installation to remove the coating material, after a contact period, to ensure that the panels are ready for immediate water penetration. Some of the suitable water-soluble coating materials include the following: Gums, such as guar, arabic, ghatti, tragacanth, agar, xanthan, karaya, locust bean, acacia, carrageenan, silicone gums, mixtures, and the like; modified celluloses, such as hydroxyethylcellulose, hydroxypropylcellulose, hydroxybutylcellulose, carboxymethylcellulose, sodium carboxymethylcellulose, and the like; gelatin; starch; modified starches; nonionic surfactants of sufficient molecular weight and water-solubility, (i.e., molecular weight of at least 600 and an HLB number of at least 8), such as nonoxynols, oxtoxynols, ethoxylated (or propoxylated) fatty alcohols, ethoxylated (or propoxylated) fatty acids or amides, ethoxylated (or propoxylated) fatty amines and dodoxynols, mixtures, and the like; polyacrylates, and their copolymers, cross-linked sufficiently for a desired water-solubility, e.g., weight average molecular weight of about 200 to about 100,000, such as polyacrylic acid, polyacrylamide, polyvinylpyrrolidones, polyvinylalcohols, polyethyleneimines, polyacrylonitrile, polymethylmethacrylate, and the like; glassy phosphates; glassy silicates; EMA (ethylene maleic anhydride); SMA (styrene maleic anhydride); functionalized silicones; silicone polymers; waxes (together with an emulsifier), for example carnauba wax, beeswax, microcrystalline wax, and the like; polyhydric alcohols, such as glycerin, ethylene glycol, propylene glycol, sorbitol, polyglycols (such as triethylene glycol), and the like; fatty alcohols; and fatty amines. The above polymers should be lightly cross-linked (e.g., wt. av. molecular wt. of about 200 to about 100,000) to provide sufficient water-insolubility for removal over a desired sustained water contact.

The preferred material is a wax obtained from National Wax Company called FRESLOK 195 having the following specifications:

Congealing Point (ASTM D-938) 61-64°C (142-148°F)

Needle Penetration at 25°C(77°F)

(ASTM D-1321)                                        6.0-9.0

ASTM Color (ASTM D-1500)                      1.5 Max.

Brookfield Viscosity (ASTM D-2669)

| | |
|---|---|
| at 149°C (300°F) | 105-125 cps |
| at 121°C (250°F) | 195-225 cps |
| at 116°C (240°F) | 225-255 cps |
| at 104°C (220°F) | 300-340 cps |
| at 93°C (200°F) | 420-470 cps |

Suggested Application Temperature 93-107°C (200°-225°F)

Blocking Point                                        54°C (130°F)

This material, when applied to facing sheet 14, as well known in the coating art, will be completely removed upon immersion in water in different periods of time, depending upon the thickness applied, as shown in TABLE I, and FIG 8:

TABLE I

| KG OF COATING PER M$^2$ | (LBS OF COATING PER 100 SQUARE FEET) | DELAYED HYDRATION IN WEEKS |
|---|---|---|
| 0.049 | 1 | 0.1 |
| 0.098 | 2 | 0.3 |
| 0.146 | 3 | 0.5 |
| 0.195 | 4 | 0.9 |
| 0.244 | 5 | 2.1 |
| 0.293 | 6 | 3.0 |
| 0.342 | 7 | 4.0 |
| 0.391 | 8 | 4.8 |
| 0.439 | 9 | 5.9 |
| 0.488 | 10 | 6.1 |

The coating material is applied in any desired amount, depending upon how much water contact, e.g., number of rains, is anticipated during handling and installation. Other materials having more or less water-solubility are coated in whatever coating thickness is needed to achieve the desired delay in hydration of the intermediate water-swellable clay layer.

## Claims

1. A panel (10) useful as a water barrier including first (13) and second (14) facing sheets having a layer of water-swellable clay (16) therebetween, wherein one of the facing sheets is water-permeable, characterized in that said water-permeable facing sheet includes a plurality of formed water channels (18) therein extending from an outer surface of the one facing sheet to an inner surface of the one facing sheet, in addition to the natural water channels therein, to allow rapid penetration of water, and in that the water channels contain a layer of material of controlled water-solubility to prevent water from passing through the water channels during installation of the panel (10) and removable by water contact after panel installation.

2. A panel (10) as claimed in claim 1, characterised in that at least one of the first and second facing sheets (13,14) are formed of paperboard.

3. A panel (10) as claimed in claim 1, characterised in that at least one of the facing sheets (13,14) is a flexible fabric material.

4. A panel (10) as claimed in claim 3, characterised in that the panel (10) further includes rigid means for providing rigidity to the panel.

5. A panel (10) as claimed in claim 4, characterised in that the rigid means comprises an interior corrugated paperboard strip (15) disposed between the outer fabric strips in contact with and secured to said fabric layers.

6. A panel (10) as claimed in claim 2, characterised in that one of the paperboard facing sheets is provided with a plurality of channels (18) therein.

7. A panel (10) as claimed in claim 6, characterised in that the other of said facing sheets comprises flexible sheet material that is water-penetrable.

8. A panel (10) as claimed in claim 6, characterised in that the other of said facing sheets comprises flexible sheet material that is not initially water-penetrable and said facing sheet includes a plurality of formed channels (18) extending completely through said facing sheet, thereby making said sheet water-penetrable.

7

9. A panel (10) as claimed in any one of the preceding claims, characterised in that at least one of said facing sheets includes a coating layer of a material of controlled water-solubility to prevent water from passing through said facing sheet during installation of the panel and to permit removal of the coating layer after installation.

10. A panel (10) as claimed in claim 9, characterised in that at least one of the facing sheets is paperboard, and wherein the paperboard layer includes a plurality of formed channels (18) containing a layer of said water-soluble material in contact with the water-swellable clay layer (16).

11. A panel (10) as claimed in claim 9, characterised in that one of said facing sheets is of flexible sheet material that is water-penetrable and includes a coating of said water-soluble material over an entire outer surface thereof.

12. A panel as claimed in claim 9, characterised in that one of said facing sheets is flexible sheet material that is not initially water-penetrable and said flexible sheet material layer includes a plurality of water channels (18) extending completely through said sheet material layer, thereby making said layer water-penetrable, said water channels containing a layer of said water-soluble coating material to prevent water from passing through the channels for a predetermined water-contact time during installation of the panel (10).

13. A method of preventing water from contacting a structure comprising installing a panel (10), as claimed in any one of claims 9 to 12, against said structure; such that said first sheet (13) is disposed against the structure and the second sheet (14) faces outwardly from said structure, said second sheet (14) including a plurality of formed channels (18) therein for faster water penetration; and disposing an overlayer of backfilling material against said second sheet (14) during installation to sandwich the panel (10) between said structure and the overlayer of backfilling material.

14. A method as claimed in claim 13, characterised in that said backfilling material disposed against said second sheet (14) is soil.

15. A method of manufacturing a panel (10) as claimed in any one of claims 1 to 12, including forming the panel including first and second facing layers (13,14) having a layer of water-swellable clay (16) therebetween, characterised in that a plurality of spaced channels (18) are formed in at least one of said facing layers extending completely through said one layer to the intermediate clay layer (16).

16. A method as claimed in claim 15, characterised in that the channels (18) are formed by rotating a shaft, having a plurality of spaced spikes extending outwardly therefrom, such that the spikes contact and puncture one or both facing layers and move the panel (10) forward for continued spike penetration throughout the length of the panel (10).

**Patentansprüche**

1. Platte 10, die als Wassersperrschicht verwendet werden kann und eine erste (13) und eine zweite (14) Außentafel mit einer dazwischenliegenden Schicht (16) aus wasserquellfähigem Ton umfaßt, wobei eine der Außentafeln wasserdurchlässig ist, dadurch gekennzeichnet, daß die wasserdurchlässige Außentafel zusätzlich zu den natürlich in ihr vorhandenen Wasserkanalen eine Vielzahl ausgebildeter Wasserkanäle (18) aufweist, die sich von der Außenfläche der einen Außentafel zur Innenfläche der einen Außentafel erstrecken, um das schnelle Eindringen von Wasser zu ermöglichen, sowie dadurch, daß die Wasserkanäle eine Werkstoffschicht mit geregelter Wasserlöslichkeit enthalten, um den Wasserdurchtritt durch die Wasserkanäle während der Aufstellung der Platte zu verhindern, welche nach der Plattenaufstellung durch den Kontakt mit Wasser entfernt werden kann.

2. Platte (10) nach Anspruch 1, dadurch gekennzeichnet, daß mindestens eine der beiden Außentafeln ( 13, 14) aus Pappe besteht.

3. Platte (10) nach Anspruch 1, dadurch gekennzeichnet, daß mindestens eine der Außentafeln (13, 14) aus einem biegsamen Textilwerkstoff besteht.

4. Platte (10) nach Anspruch 3, dadurch gekennzeichnet, daß die Platte (10) weiterhin eine starre Vorrichtung umfaßt, die der Platte eine Steifigkeit verleiht.

5. Platte (10) nach Anspruch 4, dadurch gekennzeichnet, daß die starre Vorrichtung einen Innenstreifen aus Wellpappe (15) zwischen den Gewebeaußenstreifen umfaßt, der diese berührt und an ihnen befestigt ist.

6. Platte (10) nach Anspruch 2, dadurch gekennzeichnet, daß eine der Pappaußentafeln mit einer Vielzahl von Kanälen (18) versehen ist.

7. Platte (10) nach Anspruch 6, dadurch gekennzeichnet, daß die andere Außentafel einen biegsamen, wasserdurchlässigen Tafelwerkstoff umfaßt.

8. Platte (10) nach Anspruch 6, dadurch gekennzeichnet, daß die andere Außentafel einen biegsamen Tafelwerkstoff umfaßt, der anfangs nicht wasserdurchlässig ist, und die Außentafel eine Vielzahl ausgebildeter Kanäle (18) aufweist, die sich vollständig durch die Außentafel erstrecken, wodurch die Tafel wasserdurchlässig wird.

9. Platte (10) nach einem der vorangegangenen Ansprüche, dadurch gekennzeichnet, daß mindestens eine der Außentafeln eine Beschichtung aus einem Werkstoff mit geregelter Wasserlöslichkeit aufweist, um das Durchdringen von Wasser durch die Außentafel während deren Aufstellung zu verhindern und die Entfernung der Beschichtung nach der Aufstellung zu ermöglichen.

10. Platte (10) nach Anspruch 9, dadurch gekennzeichnet, daß mindestens eine der Außentafeln aus Pappe besteht, wobei die Pappschicht eine Vielzahl ausgebildeter Kanäle (18) umfaßt, die eine Schicht des wasserlöslichen Werkstoffs aufweisen. welche die wasserquellfähige Tonschicht (16) berührt.

11. Platte (10) nach Anspruch 9, dadurch gekennzeichnet, daß eine der Außenschichten aus einem biegsamen, wasserdurchlässigen Tafelwerkstoff besteht und eine Beschichtung aus dem wasserlöslichen Werkstoff auf der gesamten Außenfläche aufweist.

12. Platte nach Anspruch 9, dadurch gekennzeichnet, daß eine der Außentafeln aus einem biegsamen Tafelwerkstoff besteht, der anfangs nicht wasserdurchlässig ist, und die biegsame Tafelwerkstoffschicht eine Vielzahl von Wasserkanälen (18) umfaßt, die vollständig durch die Tafelschicht verlaufen, wodurch die Schicht wasserdurchlässig wird, sowie dadurch, daß die Wasserkanäle eine wasserlösliche Beschichtung aufweisen, die das Durchdringen von Wasser durch die Kanäle für einen vorbestimmten Zeitraum des Wasserkontakts während der Aufstellung der Platte (10) verhindert.

13. Verfahren, das den Kontakt von Wasser zu einer Konstruktion verhindert und die Aufstellung einer Platte (10) nach einem der Ansprüche 9 bis 12 an der Konstruktion umfaßt, wobei die erste Tafel (13) zur Konstruktion weist und die zweite Tafel (14) von der Konstruktion nach außen weist, die zweite Tafel (14) eine Vielzahl ausgebildeter Kanäle (18) für eine schnelle Wasserdurchdringung in sich aufnimmt und während der Aufstellung eine Deckschicht aus Auffüllwerkstoff an der zweiten Tafel (14) hat, um die Platte (10) zwischen der Konstruktion und einer Deckschicht aus Auffüllwerkstoff anzubringen.

14. Verfahren nach Anspruch 13, dadurch gekennzeichnet, daß der Auffüllwerkstoff an der zweiten Tafel (14) Erde ist.

15. Verfahren zur Herstellung einer Platte (10) nach einem der Ansprüche 1 bis 12, das die Bildung einer Platte mit einer ersten und einer zweiten Außenschicht (13, 14) und einer dazwischenliegenden Schicht aus wasserquellfähigem Ton (16) umfaßt, dadurch gekennzeichnet, daß eine Vielzahl beabstandeter Kanäle (18) in mindestens einer der Außenschichten ausgebildet ist, die vollständig durch die eine Schicht bis zur Ton-Zwischenschicht (16) verlaufen.

16. Verfahren nach Anspruch 15, dadurch gekennzeichnet, daß die Kanäle (18) durch das Drehen einer Welle gebildet werden, die eine Vielzahl beabstandeter, sich nach außen erstreckender Metallspitzen aufweist, so daß die Metallspitzen eine oder beide Außenschichten berühren, durchstechen und die Platte (10) zum fortgesetzten Durchdringen der Metallspitzen auf der gesamten Länge der Platte (10) nach vorn bewegen.

**Revendications**

1. Panneau (10) utile comme arrêt d'eau, comprenant une première (13) et une seconde (14) feuilles extérieures entre lesquelles est intercalée une couche d'argile gonflant dans l'eau (16), dans lequel une des feuilles extérieures est perméable à l'eau, caractérisé en ce que ladite feuille extérieure perméable à l'eau comprend une pluralité de canaux d'eau (18) préformés s'étendant d'une surface externe de cette feuille extérieure à une surface interne de cette feuille extérieure, en plus des canaux d'eau naturels qu'elle contient, pour permettre la pénétration rapide de l'eau et en ce que les canaux d'eau contiennent une couche de matériau ayant une hydrosolubilité contrôlée pour interdire le passage de l'eau par les canaux d'eau durant l'installation du panneau (10) et qui peut être éliminée par contact avec de l'eau après l'installation du panneau.

2. Panneau (10) selon la revendication 1, caractérisé en ce qu'au moins une de la première et de la seconde feuilles extérieures (13, 14) est en carton.

3. Panneau (10) selon la revendication 1, caractérisé en ce qu'au moins une des feuilles extérieures (13, 14) est une étoffe flexible.

4. Panneau (10) selon la revendication 3, caractérisé en ce que le panneau (10) comprend en outre un moyen rigide destiné à donner de la rigidité au panneau.

5. Panneau (10) selon la revendication 4, caractérisé en ce que le moyen rigide comprend une bande interne (15) en carton ondulé, disposée entre les bandes d'étoffe externes et qui est en contact avec lesdites bandes d'étoffe et fixée à ces dernières.

6. Panneau (10) selon la revendication 2, caractérisé en ce que l'une des feuilles externes en carton est dotée d'une pluralité de canaux (18).

7. Panneau (10) selon la revendication 6, caractérisé en ce que l'autre desdites feuilles extérieures comprend un matériau en feuille flexible, dans lequel l'eau peut pénétrer.

8. Panneau (10) selon la revendication 6, caractérisé en ce que l'autre desdites feuilles extérieures comprend un matériau en feuille flexible dans lequel l'eau ne peut pas pénétrer initialement et en ce que ladite feuille extérieure comprend une pluralité de canaux (18) préformés s'étendant totalement à travers ladite feuille extérieure, rendant ladite feuille susceptible de pénétration par l'eau.

9. Panneau (10) selon l'une quelconque des revendications précédentes, caractérisé en ce qu'au moins une desdites feuilles extérieures comprend une couche de revêtement en un matériau ayant une hydrosolubilité contrôlée, pour interdire le passage de l'eau à travers ladite feuille extérieure durant l'installation du panneau et permettre l'enlèvement de la couche de revêtement après l'installation.

10. Panneau (10) selon la revendication 9, caractérisé en ce qu'au moins une des feuilles extérieures est en carton et dans lequel la couche de carton comprend une pluralité de canaux (18) préformés contenant une couche dudit matériau hydrosoluble en contact avec la couche d'argile gonflant dans l'eau (16).

11. Panneau (10) selon la revendication 9, caractérisé en ce qu'une desdites feuilles extérieures est en un matériau en feuille flexible dans lequel l'eau peut pénétrer et comprend un revêtement dudit matériau hydrosoluble sur toute sa surface externe.

12. Panneau selon la revendication 9, caractérisé en ce qu'une desdites feuilles extérieures est en un matériau en feuille flexible dans lequel l'eau ne peut pas pénétrer initialement et en ce que ladite couche de matériau en feuille flexible comprend une pluralité de canaux d'eau (18) s'étendant totalement à travers ladite couche de matériau en feuille, rendant ainsi ladite couche susceptible de pénétration par l'eau, lesdits canaux d'eau contenant une couche dudit matériau de revêtement hydrosoluble pour interdire le passage de l'eau à travers les canaux pendant un temps de contact avec l'eau prédéterminé durant l'installation du panneau (10).

13. Procédé de prévention du contact entre l'eau et une structure, comprenant l'installation d'un panneau (10), selon l'une quelconque des revendications 9 à 12, contre ladite structure, de telle sorte que ladite première feuille (13) est disposée contre la structure et la seconde feuille (14) est orientée vers l'extérieur de ladite structure, ladite seconde feuille (14) comprenant une pluralité de canaux (18) préformés en vue d'une pénétration plus rapide de l'eau ; et la mise en place d'une couche de recouvrement en matériau de remplissage contre ladite seconde feuille (14) durant l'installation pour prendre le panneau (10) en sandwich entre ladite structure et la couche de revêtement en matériau de remplissage.

14. Procédé selon la revendication 13, caractérisé en ce que ledit matériau de remplissage mis en place contre ladite seconde feuille (14) est de la terre.

15. Procédé de fabrication d'un panneau (10) selon l'une quelconque des revendications 1 à 12, comprenant la formation du panneau comprenant la première et la seconde couches extérieures (13, 14) entre lesquelles est intercalée une couche d'argile gonflant dans l'eau (16), caractérisé en ce qu'une pluralité de canaux (18) espacés sont formés dans au moins une desdites couches extérieures s'étendant totalement à travers ladite couche jusqu'à la couche intermédiaire d'argile (16).

16. Procédé selon la revendication 15, caractérisé en ce que les canaux (18) sont formés par rotation d'une tige présentant une pluralité de clous espacés s'étendant vers l'extérieur de telle sorte que les clous sont en contact avec une des deux couches extérieures et la trouent et déplacent le panneau (10) vers l'avant en vue d'une pénétration continue des clous sur toute la longueur du panneau (10).

FIG 1

FIG. 2

FIG. 3

FIG. 4

FIG. 7

FIG. 10

FIG. 11

FIG. 5

FIG. 6

FIG. 8

FIG. 9

FIG. 12

FIG. 13

FIG. 14

FIG. 15

15

## FIG. 16

WEEKS OF DELAYED HYDRATION

( LBS. OF COATING PER 1000 SQ. FEET )

| 0.049 | 0.146 | 0.244 | 0.342 | 0.439 |
| 0.098 | 0.195 | 0.293 | 0.391 | 0.488 |

KG OF COATING PER SQUARE METRE